# EUROPEAN PATENT APPLICATION

(11) **EP 4 722 881 A1**
(43) Date of publication of application: **08.04.2026**
(21) Application number: 24810400.2
(22) Date of filing: 21.05.2024
(51) Int. Cl.: G06F 3/04883

(54) **METHODS AND APPARATUS FOR PAGE INTERACTION, DEVICE AND STORAGE MEDIUM**

(30) Priority: 24.05.2023 CN 202310597935
(71) Applicant: Beijing Zitiao Network Technology Co., Ltd., Beijing 100190 (CN)
(72) Inventor: WANG, Lei, Beijing 100028 (CN); ZOU, Changli, Beijing 100028 (CN); SUN, Ping, Beijing 100028 (CN)
(74) Representative: Isarpatent
(86) International application number: PCT/CN2024/094556
(87) International publication number: WO 2024/240158

(57) **Abstract**

The embodiments of the disclosure provide methods, apparatuses, devices and storage media for page interaction. In the method, a plurality of navigation tags are presented in sequence in a navigation region of a page; a position adjustment control for a first navigation tag of the plurality of navigation tags is presented; and a presentation position of the first navigation tag is presented in the navigation region in response to a detection of a preset operation on the position adjustment control. In this way, the user can conveniently and quickly customize the arrangement sequence of the plurality of navigation tags. The presentation of the navigation tags is flexibly adjusted according to the use requirement, which improve the page browsing efficiency and the user experience.

## Description

**This** application claims priority to Chinese Patent Application No. 202310597935.1, filed on May 24, 2023, entitled "Method, Apparatus, Device, and Storage Medium for Page Interaction", the entirety of which is incorporated herein by reference.

### FIELD

Example embodiments of the present disclosure generally relate to the field of computers, and in particular, to a method, an apparatus, a device, and a computer-readable storage medium for page interaction.

### BACKGROUND

With the rapid development of Internet technologies, various applications have become important tools in people's daily life. Different applications often have different functions, and users can implement specific services through specific applications with specific functions.

In order to integrate more functions in an application and provide more content, multiple pages are usually associated in an application to provide different contents. Where multiple pages are associated, the application may provide a navigation region to enable jumps between pages based on navigation tags in the navigation region. The navigation region may be located at the top, bottom, or side region of the page for presenting the navigation tag. The navigation region serves as a link site or various pages within the application.

### SUMMARY

In a first aspect of the present disclosure, a method for content presentation is provided. The method comprises: presenting a plurality of navigation tags in sequence in a navigation region of a page; presenting a position adjustment control for a first navigation tag of the plurality of navigation tags; and adjusting a presentation position of the first navigation tag in the navigation region in response to a detection of a preset operation on the position adjustment control.

In a second aspect of the present disclosure, a method for content presentation is provided. The method comprises: presenting a plurality of navigation tags in sequence in a navigation region of a page; presenting a panel in response to a detection of a preset gesture for the navigation region, the panel presenting at least a plurality of tag indications respectively corresponding to the plurality of navigation tags; detecting, in the panel, a position adjustment operation for the plurality of tag indications; and adjusting a presentation order of the plurality of navigation tags in the navigation region based on the position adjustment operation.

In a third aspect of the present disclosure, an apparatus for page interaction is provided. The apparatus comprises: a first presentation module, configured to present a plurality of navigation tags in sequence in a navigation region of a page; a second presentation module, configured to present a position adjustment control for a first navigation tag of the plurality of navigation tags; and a first adjustment module, configured to adjust a presentation position of the first navigation tag in the navigation region in response to a detection of a preset operation on the position adjustment control.

In a fourth aspect of the present disclosure, an apparatus for page interaction is provided. The apparatus comprises: a third presentation module, configured to present a plurality of navigation tags in sequence in a navigation region of a page; a fourth presentation module, configured to present a panel in response to a detection of a preset gesture for the navigation region, the panel presenting at least a plurality of tag indications respectively corresponding to the plurality of navigation tags; a detection module, configured to detect, in the panel, a position adjustment operation for the plurality of tag indications; and a second adjustment module, configured to adjust a presentation order of the plurality of navigation tags in the navigation region based on the position adjustment operation.

In a fifth aspect of the present disclosure, an electronic device is provided. The electronic device comprises at least one processing unit; and at least one memory coupled to the at least one processing unit and storing instructions for execution by the at least one processing unit. The instructions, when executed by the at least one processing unit, causes the electronic device to perform the method of the first aspect and/or the second aspect.

In a sixth aspect of the present disclosure, a computer-readable storage medium is provided. The computer-readable storage medium stores a computer program, and the computer program is executable by the processor to implement the method of the first aspect and/or the second aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages and aspects of the embodiments of the present disclosure will become more apparent in combination with the accompanying drawings and with reference to the following detailed description. In the drawings, the same or similar reference numbers refer to the same or similar elements, where:
FIG. 1 illustrates a schematic diagram of an example environment in which embodiments of the present disclosure can be implemented;
FIG. 2A to FIG. 2F are schematic diagrams of example pages for adjusting a navigation tag according to some embodiments of the present disclosure;
FIG. 3A to FIG. 3C are schematic diagrams of example pages for adjusting a navigation tag according to some other embodiments of the present disclosure;
FIG. 4 illustrates a flowchart of a method for page interaction according to some embodiments of the present disclosure;
FIG. 5 illustrates a flowchart of a method for page interaction according to some other embodiments of the present disclosure;
FIG. 6 illustrates a block diagram of an apparatus for page interaction according to some embodiments of the present disclosure;
FIG. 7 illustrates a block diagram of an apparatus for page interaction according to some other embodiments of the present disclosure; and
FIG. 8 illustrates a block diagram of an electronic device in which one or more embodiments of the present disclosure may be implemented.

### DETAILED DESCRIPTION

The embodiments of the present disclosure will be described in more detail below with reference to the accompanying drawings. Although some embodiments of the present disclosure are shown in the drawings, it would be appreciated that the present disclosure may be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for the purpose of illustration and are not intended to limit the scope of protection of the present disclosure.

In the description of the embodiments of the present disclosure, the term "including" and similar terms would be appreciated as open inclusion, that is, "including but not limited to". The term "based on" would be appreciated as "at least partially based on". The term "one embodiment" or "the embodiment" would be appreciated as "at least one embodiment". The term "some embodiments" would be appreciated as "at least some embodiments". Other explicit and implicit definitions may also be included below.

Herein, unless explicitly stated, one step is performed "in response to A" does not imply that this step is performed immediately after "A", but may include one or more intermediate steps.

It will be appreciated that the data involved in this technical proposal (including but not limited to the data itself, data acquisition or use) shall comply with the requirements of corresponding laws, regulations and relevant provisions.

It will be appreciated that before using the technical solution disclosed in each embodiment of the present disclosure, users should be informed of the type, the scope of use, the use scenario, etc. of the personal information involved in the present disclosure in an appropriate manner in accordance with relevant laws and regulations, and the user's authorization should be obtained.

For example, in response to receiving an active request from a user, a prompt information is sent to the user to explicitly prompt the user that the operation requested operation by the user will need to obtain and use the user's personal information. Thus, users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving the user's active request, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above notification and acquisition of user authorization process are only schematic and do not limit the implementations of the present disclosure. Other methods that meet relevant laws and regulations may also be applied to the implementation of the present disclosure.

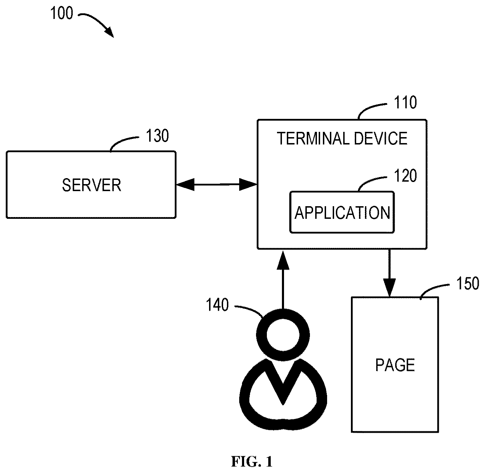

FIG. 1 illustrates a schematic diagram of an example environment 100 in which embodiments of the present disclosure can be implemented. In this example environment 100, an application 120 is installed in terminal device 110. The user 140 may interact with the application 120 via the terminal device 110 and/or an attachment device of the terminal device 110. The application 120 may be a content acquisition application (for example, a video online acquisition application), an online shopping application, or any other suitable application.

In environment 100 of FIG. 1, terminal device 110 may present page 150 of application 120 if application 120 is active. The page 150 may include various pages that the application 120 can provide, such as a content presentation page, a content authoring page, a content post page, a message page, a personal homepage, and so forth. The application 120 may provide content viewing function for viewing various types of content posted in the application 120. Via the corresponding page, the application 120 may provide the user 140 with online content, such as media content. Via appropriate ways, such as clicking or selecting a page element, the application 120 may also provide the user 140 with the ability to switch among a plurality of pages for presenting content. As used herein, "media content" includes one or more types of content, such as images, image sets, videos, animated images, audios, texts, and the like.

In some embodiments, terminal device 110 communicates with server 130 to enable provisioning of services to application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interfaces for a user (such as a "wearable" circuit, etc.). The server 130 may be various types of computing systems/servers capable of providing computing power, including but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Generally, multiple types of content may be provided in an application and presented with different pages, respectively. For example, a navigation tag associated with the page may be provided so that the user may utilize the navigation tag to indicate, jump to the desired page. Typically, navigation tags may be integrated into a navigation region of an application. There may be a set of navigation tags in the navigation region to enable the user to switch the page. In addition, the navigation region may be presented in the page of the application in a floating manner to avoid affecting the use of the navigation region by the page content.

Currently, the ordering and position of navigation tags in many applications' navigation regions are fixed, do not support user modification, and lack flexibility. In addition, when there are many navigation tags available, it may be that only some fixed navigation tags are presented in view of the limited size of the navigation region, and more other navigation tags need to be displayed through complex operations. This will hinder the convenience of page browsing, making it impossible for some tags of user's interest to be placed in positions that are easy to see and manipulate.

According to an embodiment of the present disclosure, a solution for adjusting a navigation tag is proposed. For a plurality of navigation tags presented sequentially in the navigation region of the page, a position adjustment by the user for at least one navigation tag of the plurality of navigation tags is detected. A presentation order of the plurality of navigation tags in the navigation region is adjusted based on the detected position adjustment operation.

In some embodiments, the position adjustment of the navigation tag may be implemented by dynamic provision of a position adjustment control for a particular navigation tag. Specifically, a plurality of navigation tags are presented in sequence in a navigation region of a page; a position adjustment control for a first navigation tag of the plurality of navigation tags is presented; and a presentation position of the first navigation tag in the navigation region is adjusted in response to a detection of a preset operation on the position adjustment control. Through the presentation of the position adjustment control, the user can quickly adjust the position of the specific navigation tag according to needs, so that the arrangement of the navigation tags may satisfy the use requirement of the user, and the page browsing efficiency and the user experience are improved.

In some embodiments, the panel may be triggered by a preset gesture, so that the user can customize the arrangement of navigation tags by operation in the panel. Specifically, a plurality of navigation tags are presented in sequence in a navigation region of a page; a panel is presented in response to a detection of a preset gesture for the navigation region, wherein the panel presents at least a plurality of tag indications respectively corresponding to the plurality of navigation tags; in the panel, a position adjustment operation for the plurality of tag indications is detected; and a presentation order of the plurality of navigation tags in the navigation region is adjusted based on the position adjustment operation.

Therefore, the user can adjust the navigation tag in the navigation region by selecting an appropriate navigation tag adjustment manner according to requirements. This allows the user to customize the arrangement order of the plurality of navigation tags conveniently and quickly, flexibly adjust the presentation of the navigation tag according to the use requirement, and it also helps to improve the page browsing efficiency and the user experience.

Some example embodiments of the present disclosure will be described below with continued reference to the accompanying drawings.

In an embodiment of the present disclosure, when providing the user with the page 150, the terminal device 110 may present a plurality of navigation tags in the navigation region of the page 150 according to a certain arrangement order. Generally, the number of navigation tags presented in the navigation region may be preset based on the space occupied by the navigation tag and the overall space provided by the navigation region, so as to avoid presenting too many navigation tags at the same time, resulting in the navigation tags being too small and inconvenient for a user to use.

For example, in a case where the navigation tags are arranged horizontally, the arrangement order may be determined based on a certain arrangement logic, for example, the navigation tags are sequentially arranged from left to right or from right to left. It should be understood that the above arrangement order and the arrangement logic on which it is based are only illustrative and are not intended to be limited in any way. For example, the above arrangement order may also be vertical from top to bottom, from bottom to top, or ring arrangement, etc. Thus, navigation tags presented in clutter are avoided.

In an embodiment of the present disclosure, the terminal device 110 may allow user 140 to adjust positions of the navigation tags in the page 150 as needed, so that the user 140 may provide a personalized selection and configuration capability for the navigation tags by customizing the arrangement of the navigation tags. Therefore, in the case of limited screen space, the user 140 can still obtain the needed navigation tags, which improve the user experience. For example, the user 140 may be allowed to adjust the arrangement order of the navigation tags in the navigation region, such as, to exchange the positions of the navigation tag A and the navigation tag B, adjust the presentation position of the navigation tag A onto the left side of the navigation tag C, and so on. This position adjustment interaction may be implemented in a variety of ways.

In some embodiments, the terminal device 110 may provide a control for position adjustment in the page, such that the user 140 adjusts the navigation tag based on the position adjustment control. For example, the position adjustment control may be presented in association with navigation tag A, which user 140 uses to adjust the presentation position of navigation tag A. Alternatively or additionally, the position adjustment control may also be provided in a bubble manner to provide a better presentation effect for the user 140.

In some embodiments, the terminal device 110 may provide the user 140 with a panel for adjusting the position of the navigation tag, so that the user 140 can complete the adjustment to the navigation tag by using the tag indication which is presented in the panel and associated with the navigation tag.

The following will be discussed and explained on the basis of the two different adjustment ways, respectively.

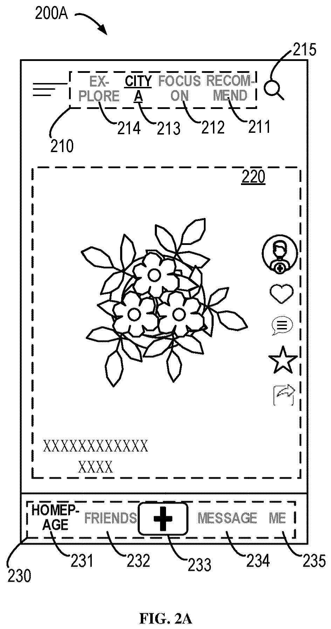

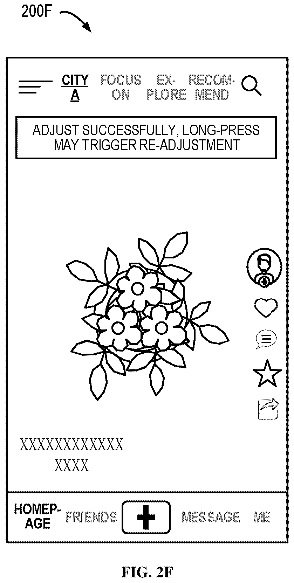

First, the way in which a position adjustment control for adjusting the position is provided for the navigation tag is discussed. For ease of understanding, the explanation will be based on Figures 2A to FIG. 2E. FIG. 2A to FIG. 2E respectively show schematic diagrams of an example page 200A to 200F for adjusting a navigation tag according to some embodiments of the present disclosure.

In an embodiment of the present disclosure, the terminal device 110 may provide a navigation region in the page 150, and a plurality of navigation tags are presented in the navigation region. As explained above, a plurality of navigation tags may be arranged, presented in an order. For convenience of description, the arrangement order used herein and hereafter is exemplified in a horizontal arrangement from right to left, that is, the navigation label located on the far right side of the navigation region may be considered as the foremost navigation tag.

For example, referring to FIG. 2A, a navigation region 210 is presented in the page 200A shown in FIG. 2A. The navigation region 210 comprises a plurality of navigation tags 211 to 214, in which a "recommendation" navigation tag 211 is taken as the most forward navigation tag. Further, the content currently presented in page 200A (presented by, for example, region 220) may be associated with, correspond to, a navigation tag. Thus, the terminal device 110 may also highlight the navigation tag (e.g., navigation tag 213) in the current alternative, to indicate the navigation tag associated with the content presented in the current page. Similarly, when the user 140 selects another navigation tag and jumps to another page, the terminal device 110 may adjust the highlighted navigation tag in a similar manner for prompt. For ease of description, the page currently presented is referred to as a first page.

In some embodiments, the terminal device 110 may further provide a plurality of navigation regions, for example, to implement multi-level navigation tag division. For example, in FIG. 2A, the terminal device 110 further provides a navigation region 230, in which navigation tags 231 to 235 are included. The navigation tag presented in navigation region 210 is associated with a selected navigation tag in navigation region 230. For example, when the navigation tag 231 in navigation region 230 is selected, navigation tags 211 to 214 associated with navigation tag 231 (e.g., under the content item indicated by navigation tag 231) are presented in navigation region 210. The content presented in the current page is associated with the "City A" navigation tag 213 under the "Home" navigation tag 231 item.

Further, the terminal device 110 presents a position adjustment control for the navigation tag in the plurality of navigation tags. In an embodiment of the present disclosure, the terminal device 110 may present a position adjustment control for the navigation tag in the navigation tags in the page 150. Generally, the navigation tag presented with the position adjustment control may be any navigation tag in the navigation region, which may be referred to as a first navigation tag for convenience of description.

In some embodiments, in order to improve the adjustment quality, in other words, to make the adjustment more likely to be accepted, the terminal device 110 may be configured with a certain presentation logic, so as to present the position adjustment control for the navigation tag that may be more desirable to be adjusted. For example, the terminal device 110 may determine, based on the historical interaction of the user 140 for the page corresponding to the navigation tag, the navigation tag to be presented with the position adjustment control.

In some embodiments, if the first navigation tag corresponds to the first page, the terminal device 110 may detect whether a predetermined interaction condition associated with the first page and the user is satisfied, to determine whether to present a position adjustment control for adjusting the first navigation tag. For example, the preset interaction condition may include whether a time that the user 140 browses in the first page within a period of time exceeds a time threshold, whether the number of works browsed exceeds a threshold, and the like. For example, the terminal device 110 may present the position adjustment control for the first navigation tag in a case where it is determined that the preset interaction condition of the user 140 meets the requirement (for example, the browsing time on the first page exceeds the time threshold within a certain period of time). Thus, it is possible to increase its presentation order when, for example, the user 140 uses a certain navigation tag more commonly to facilitate the use of the user 140. For another example, when the first navigation tag does not correspond to the first page, for the navigation tag that is not selected and triggered by the user 140, the terminal device 110 may similarly detect whether the first navigation tag is not used by the user 140 for a long time, or the number of times the first navigation tag is triggered for a period of time is lower than a threshold, and when the condition is satisfied (for example, not used by the user 140 for a long time), present the position adjustment control. Thus, when a certain navigation tag is not commonly used by the user 140, the user 140 may reduce its presentation order to facilitate the use of other navigation tags by the user 140.

In some embodiments, if the first navigation tag corresponds to the first page, for the first navigation tag, the terminal device 110 may present the position adjustment control corresponding to the first navigation tag after determining that the first page is presented for a predetermined time (e.g., after 30s). This may facilitate the user 140 to adjust the navigation tag associated with the currently presented page while avoiding interference to the user 140. For example, the user 140 may just browse page or in a page switching process, providing a position adjustment control too quickly and frequently may cause unnecessary interference to the user 140, affecting the use experience of the user 140. This configuration may provide a better user experience to the user 140 for this scenario.

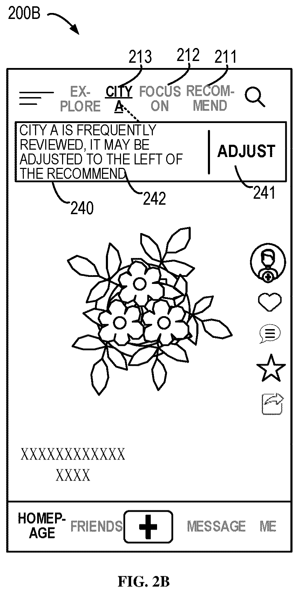

For example, referring to the page 200B shown in FIG. 2B, the position adjustment control 241 is presented with respect to the first navigation tag (i.e., the navigation tag 213) in the page 200B. For example, the position adjustment control 241 may be provided for the user 140 after browsing the first page (e.g., page 200A) for more than 30 seconds. Alternatively or additionally, in order to facilitate the user 140 to know the reasons, effects, and adjustment results of provision of the position adjustment control 241, the terminal device 110 may provide the first prompt information 242 in association with the position adjustment control 241. Alternatively or additionally, in order to facilitate the user 140 to better associate the position adjustment control 241 with the first prompt information 242, the terminal device 110 may combine the two with the combination presentation style (e.g., the prompt box 240) including, but not limited to, a bubble and a small window to be presented to the user 140.

For the position adjustment control, different adjustment logics may also be configured according to specific applications to meet different adjustment requirements. For example, the adjustment logic for the position adjustment control may adjust the navigation tag to a certain preset order location (for example, the first, the last), or may raise or lower the order location of the navigation tag by a preset number (for example, if the position adjustment control is triggered once, one order location is forwarded), and the like. In some embodiments, the terminal device 110 may configure the target position in association with the position adjustment control (which may be referred to as the first preset position for convenience of description). That is, after the user 140 triggers the position adjustment control, the corresponding navigation tag is adjusted to the first preset position. The first preset position may be a forward position in the navigation region. For example, the first preset position may be a position of a first order location in the navigation region, a second order location, and the like. Thus, the user 140 may adjust the current navigation tag to the corresponding first preset position based on the position adjustment control 241. Alternatively or additionally, the terminal device 110 may be configured with one or more fixed navigation tags based on actual requirements, and each fixed navigation tag will not change position because of adjustment of other navigation tags. In some embodiments, the plurality of navigation tags may also be fixed in a "group" form. For example, the navigation tag of the first order location to the third order location is a fixed navigation tag A, a navigation tag B, and a navigation tag C, which does not change due to adjustment of other navigation tag positions.

In some embodiments, when the adjustment logic is set, a certain constraint (for example, an order location constraint) may be set for the navigation tag, so as to enrich the use experience of the user 140, and avoid the problem that some necessary pages and functions cannot be provided due to adjustment of the user 140. For example, in the above example, the terminal device 110 may expect to stably provide a certain navigation tag for the user 140 at a fixed (or stable) position. For example, the terminal device 110 may desire to stably present a "recommend" navigation tag 211 at a first order location (e.g., the rightmost). For convenience of description, the navigation tag expected to be stably provided at a fixed position may be referred to as a second navigation tag, and correspondingly, a page provided based on the second navigation tag may be referred to as a second page, and a fixed position of the second navigation tag is a second preset position in the navigation region. In this case, the first preset position may be configured to be adjacent to the second preset position (for example, the first preset position is the first position on the left side of the second preset position). Therefore, while maintaining the original fixed logic for the second navigation tag, the presentation order location of the adjusted navigation tag may be raised as much as possible, so as to take into account the original presentation logic and the dynamic adjustment needs of the user. It should be understood that the description of the navigation tag 211 is merely illustrative, the present disclosure is not intended to be limited thereto. The fixed navigation tag may be arbitrary, such as the navigation tag 213, the navigation tag 214, and the like, in combination with the actual use case.

Alternatively or additionally, the second page may also be configured to be the initial page (or default page) provided to the user 140 after the application 120 is started by the user 140, or the default page presented in the navigation tag alternative (e.g., the "home page" navigation tag 231) in the bottom navigation region 230, or a page otherwise provided with a fixed display position.

In some embodiments, when the adjustment logic is set, the adjustment logic may also be set in a step-by-step manner. For example, the position adjustment control 241 may be configured to, once triggered, cause the corresponding first navigation tag to move to a predetermined order location in a predetermined direction. In some embodiments, the predetermined direction may be determined based on an arrangement manner of a set of navigation tags. For example, in a case where the adjustment manner is to raise the order location, the predetermined direction may be a direction toward a position that is forward of the current presentation position of the first navigation tag (for example, in an example arranged from right to left, the predetermined direction may be from left to right). In the case where there is a fixed second navigation tag (e.g., navigation tag 211), a direction corresponding to the raise of order location may be a direction pointing from the position of the first navigation tag to the second navigation tag, for example in page 200B, such a direction may be a direction pointing to navigation tag 211 from navigation tag 213. This allows the adjusted navigation tag 213 to be closer to the navigation tag 211, i.e., having a higher presentation order location before adjustment. Generally, a certain predetermined order location referenced in the movement may be in units of 1 order location, so that the navigation tag is adjusted in a step-by-step manner. In this case, the user 140 may also continuously click the position adjustment control 241 to indicate multiple movements, and the terminal device 110 may determine the number of movements according to the interaction result of the user 140, and correspondingly move. It should be understood that the predetermined order location may also be in units of other values, for example, 2, 3, etc. , to implement a jump type movement, which is not limited in the present disclosure.

Further, when the user 140 performs a preset operation based on the position adjustment control 241 (for example, the position adjustment control 241 is triggered by using a single left click, a plurality of left clicks of the mouse, or based on a gesture, a touch trigger, or the like), the terminal device 110 may respond, and adjust a presentation position of the first navigation tag (for example, the navigation tag 213) in the navigation region 210. In an embodiment of the present disclosure, if the position adjustment control 241 is triggered, the terminal device 110 may adjust the navigation tag 213 indicated by the position adjustment control 241 based on the adjustment logic of the position adjustment control 241. For example, in the case that the position adjustment control 241 is configured to move 1 order location of adjustment logic to the left, if the position adjustment control 241 is triggered, the terminal device 110 may adjust the navigation tag 213 to a position originally occupied by the navigation tag 212, and push the navigation tag 212 to a position originally occupied by the navigation tag 213, so as to implement right shift one order location of the navigation tag 213. Alternatively or additionally, in order to facilitate the user 140 to understand the adjustment process, the terminal device 110 may also present a movement of the first navigation tag from the current presentation position to the adjusted presentation position with an animation effect , so as to facilitate understanding by the user 140.

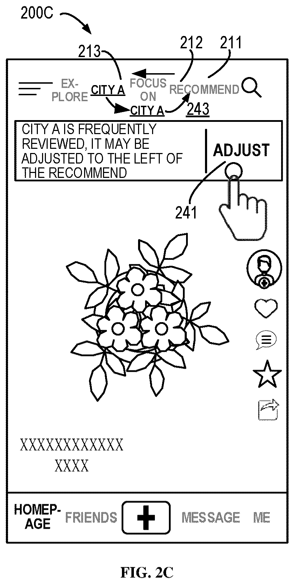

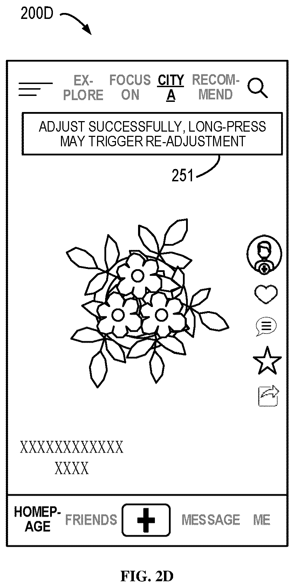

For example, referring to FIG. 2C and FIG. 2D, in the page 200C, after the user 140 triggers the position adjustment control 241, the terminal device 110 may present a process of right-shifting 1 order location of the navigation tag 213 by using the animation effect 243, and obtain the adjusted page 200D shown in FIG. 2D. In some embodiments, the adjusted page 200D may further present second prompt information 251 to prompt the adjustment result (for example, "adjustment success"). In some embodiments, if the terminal device 110 is further provided with other adjustment manners, for example, as discussed in detail later, in a manner in which the panel is invoked based on a preset gesture (for example, a long press) for adjustment, the terminal device 110 may further prompt in the second prompt information 251, for example, the second prompt information 251 may further include "long press may trigger re-adjustment".

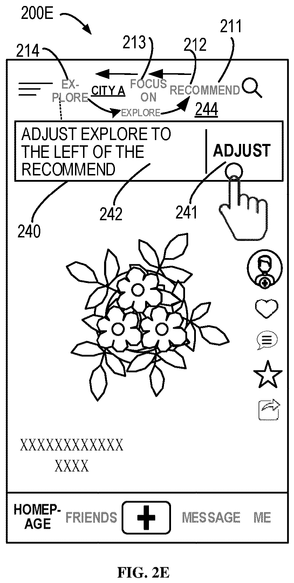

For ease of understanding, referring to FIG. 2E, in FIG. 2E, the adjustment logic of the position adjustment control 241 may be directly adjusting the associated first navigation tag to a position adjacent to the second navigation tag (i.e., the first preset position). To more clearly describe this, in FIG. 2E, adjustments may be made to the "explore" navigation tag 214, and accordingly, the prompt box 240 may be associated with the navigation tag 214. For example, the information indicated in the first prompt information 242 may be changed to "adjust *explore* to the left side of *recommend"* to indicate this. Similarly, the terminal device 110 may also present the process of moving the navigation tag 214 to the left side of the "recommend" navigation tag 211 with the animation effect 244, and obtain the adjusted page 200F.

Therefore, by providing the position adjustment control, the user can conveniently and quickly adjust the navigation tag in the navigation region.

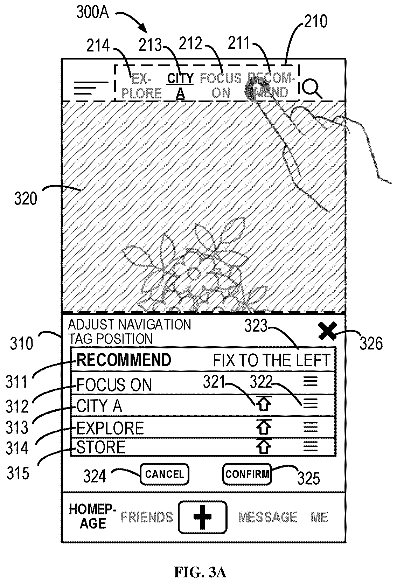

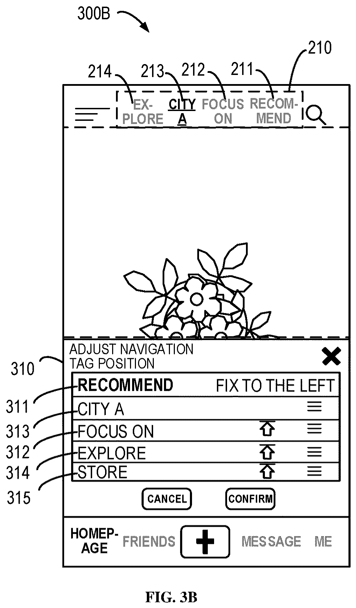

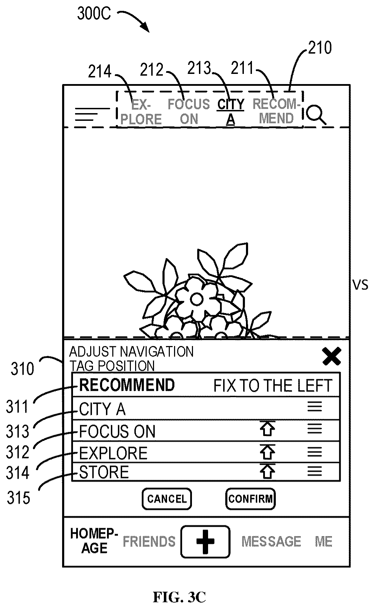

Next, the specific content of invoking the panel based on the preset gesture to implement the adjustment will be discussed in detail. For ease of understanding, discussion will be made with reference to FIG. 3A to FIG. 3C. FIG. 3A to FIG. 3C respectively show schematic diagrams of an example page 300A to an example page 300C for adjusting a navigation tag according to some other embodiments of the present disclosure.

In an embodiment of the present disclosure, the terminal device 110 may similarly provide a navigation region (for example, a navigation region 210) in the page 150. The navigation region 210 includes a plurality of navigation tags 211 to 214 presented in sequence, wherein reference may be made to the foregoing discussion of related parts, which is not repeated herein.

In an embodiment of the present disclosure, the terminal device 110 may be configured with a preset gesture in association with the navigation region 210, and respond when it is detected that the user 140 makes a preset gesture for the navigation region 210, so as to provide a panel (also referred to as an "adjustment panel" or a "tag adjustment panel") for adjusting the navigation region 210. In some embodiments, the preset gesture may include a continuous-click gesture, a long-press gesture, and the like, so that the user 140 may interact with the terminal device 110 based on a preset gesture to trigger the presentation of the panel for navigation tag adjustment. In addition, the terminal device 110 may further expand based on the area of the navigation region 210, and also use a vicinity of a certain range of the navigation region 210 (for example, a vicinity determined by extending the navigation region 210 by a preset distance) as the detection region of the preset gesture, to facilitate the use for the user 140. Thus, the terminal device 110 may detect whether the user 140 desires to evoke the panel by detecting whether there is a long-press gesture (e.g., long-press than 10 seconds) of the user 140 in the navigation region 210 or in the vicinity of the navigation region 210.

In some embodiments, prompt information may be provided to instruct the user 140 to trigger the presentation of the panel through a preset gesture. For example, in the embodiment based on the position adjustment control, the second prompt information 251 "long press may trigger re-adjustment" may be provided, so that the user 140 knows how to trigger the adjustment panel. In some embodiments, even if the navigation tag is not adjusted based on the position adjustment control, prompt information may be presented at an appropriate position of the currently presented page at an appropriate time, for example, the prompt information "long press may trigger adjustment of the navigation tag" may be associated to the navigation region 210. In some embodiments, the terminal device 110 may adaptively adjust the prompt information based on a specific gesture used by the terminal device 110. For example, the terminal device 110 may modify the "long press may trigger adjustment of the navigation tag" to "triple-click may trigger adjustment".

For the triggered panel, the terminal device 110 may present the panel on the page content by, for example, suspending, pulling up from the bottom of the page, so that the content of the panel may be fully presented to the user 140. In some embodiments, the terminal device 110 may select to present the panel separately from the navigation region 210, so as to avoid the navigation region 210 and the panel from being blocked from each other, thereby facilitating the subsequent presentation of the preview of the navigation tag adjustment in the navigation region 210. The navigation tag in the navigation region 210 may correspond to each tag indication in the panel. For example, in the visual style, the style in the navigation tag and the tag indication may be consistent, and the presentation order indicated by each tag is the same as the presentation order of the navigation tag. This can facilitate the user 140 to understand content in the panel and use it, and in some embodiments, the navigation region 210 can be used to preview the adjustment result obtained based on the panel. As described below, the position of the tag indication is manipulated and adjusted in the panel, which accordingly causes the position adjustment to the navigation tag in the navigation region.

Alternatively or additionally, when the panel is presented in the page, the terminal device 110 may further cause the navigation region 210 to be highlighted relative to at least a portion of the region in the page, so that the user 140 observes the navigation region 210 more clearly.

For example, refer to FIG. 3A. In the page 300A, the terminal device 110 may present the panel 310 after detecting a long press gesture of the user 140 on the navigation region 210. When the panel 310 is presented, the terminal device 110 may further process other parts (for example, the region 320) in the page 300A by, for example, blanking, blurring, adding a mask layer, or the like, to achieve the purpose of highlighting the navigation region 210.

In the panel 310, tag indications 311 to 315 may be presented. The tag indication may correspond to a navigation tag, or the operation for the tag indication may be applied in association to the navigation tag to implement the adjustment. For example, the tag indication 311 may correspond to, be associated with, the tag indication 312, and the tag indication 312 may correspond to, be associated with, the navigation tag 212. It should be understood that, in some embodiments, the tag indication (for example, the tag indication 315) of the navigation tag not currently presented in the navigation region 210 may also be provided in the panel 310, so that the user 140 can achieve the purpose of newly adding the navigation tag in the navigation region 210, for example. In some embodiments, the presentation order of the tag indication in the panel 310 may correspond (e.g., sequentially arrangement) to the navigation tags in the navigation region 210. For example, the order of the tags indication presented from top to bottom in the panel 310 is equivalent to the order from right to left in the navigation region 210 (that is, the uppermost tag indication corresponds to the rightmost navigation tag). Thus, the user 140 may better recognize the presentation content in the navigation region 210 and the panel 310.

In some embodiments, in the panel 310, the user 140 may implement the position adjustment operation and adjust the position of the tag indication by, for example, a dragging gesture to drag the tag indication and drag the region associated with the tag indication. Specifically, for the tag indication expected to be adjusted by the user 140, the user 140 may move the tag indication from the current position (which may be referred to as the first position for convenience) to the second position, for example, by dragging, to indicate the position adjustment of the tag indication. For example, the user 140 may adjust the "city A" to the position originally occupied by the "attention" tag indication 312 by dragging the tag indication 313 to the position of the tag indication 312, The layout of the adjusted navigation region may refer to the layout of the navigation region in FIG. 2D, which will not be repeated here.

To facilitate user 140 to use panel 310, an adjustment control may be provided in panel 310 in association with the tag indication. The user 140 may use the adjustment control to trigger adjustment of the tag indication, and further adjust the navigation tag corresponding to the tag indication. In some embodiments, for one or more tag indications in the panel 310, a sticky control for the sticky tag indication may be presented. In some embodiments, in addition to or as an alternative to a dragging gesture, a drag control (sometimes also referred to as a "hamburger bar") for assisting the user 140 in dragging the tag indication may also be provided in the panel 310. For example, the drag gesture indicated by the drag tag may be implemented by dragging a drag control associated with the tag indication. By dragging the drag control associated with the tag indication, the user 140 can conveniently and accurately complete the dragging. In some embodiments, the corresponding drag logic may also be configured for the drag control. For example, when the user 140 drags the drag control above the other tag indication, the position of the dragged tag indication may be adjusted in an inserted manner (for example, the tag indication is inserted above the other tag indication). For example, when the user 140 drags the drag control to the region of other tag indication (for example, the drag control falls into the region associated with the other tag indication), the position of the dragged tag indication may be exchanged to the position of the other tag indication, to implement position adjustment.

In some embodiments, the terminal device 110 further provides a deletion control for deleting the tag indication, and is used for the position adjustment control associated with the logic such as above step-by-step and position adjustment (for example, a shift up control for shifting up 1 order location and a shift down control for shifting down 1 order location). Therefore, the user 140 can quickly send the corresponding instruction based on these controls to implement the operation. For example, for the deletion control, the user 140 may use it to trigger a deletion instruction for the associated tag indication, so that the terminal device 110 cancels in the navigation area, the presentation of the navigation tag corresponding to the tag indication, based on the deletion instruction.

In some embodiments, the terminal device 110 may only present some of all controls that may be provided in the panel 310, for example, only a sticky control, a drag control, and the like. The control that is not presented, may be provided to the user 140 in a manner that invokes the extended sub-panel by, for example, left sliding, right sliding the tag indication region (or a vicinity of the region of the tag indication). Thus, the panel 310 is provided in a more compact manner to provide more functionality for the user 140.

For example, with continued reference to FIG. 3A, in the panel 310, the sticky control 321 and the drag control 322 may be presented in association with the tag indication 313.

In addition, for the sticky control, if the tag indication is already in the highest order location allowed to be adjusted, the sticky control may not be provided, so as to avoid misleading the user 140.

For the sticky logic of the sticky control, after the sticky control of a certain tag indication is triggered (for example, the user 140 triggers the sticky control through the preset operation such as the left click of the mouse described above), the terminal device 110 may make a respond, and adjust the tag indication in the panel 310 to the first preset position in the panel. Accordingly, in response to the sticky operation, the navigation tag corresponding to the sticky tag indication is adjusted to the presentation first preset position (e.g., the left side of the "recommend" navigation region of the presentation sequence) in the navigation region 110. As described above, in the case where there is a fixed navigation tag, when the terminal device 110 configures the first preset position associated with the sticky control, a second preset position of the fixed navigation tag should be further considered. For example, as discussed above, the first preset position may be a position adjacent to the second preset position, so as to avoid damaging the original tag fixing logic.

In some embodiments, for the tag indication (which may be referred to as the second tag indication for convenience) of the fixed navigation tag (for example, the "recommend" navigation tag 211), the position adjustment control such as the sticky control and the drag control may be no longer configured to avoid the misoperation of the user 140. Alternatively or additionally, prompt information may also be presented in association with the fixed navigation tag to feed back the fixed logic and the position of the second tag indication to the user 140. For example, in page 300A, for fixed navigation tag 211, prompt information 323 may be presented in association with tag indication 311 in panel 310.

In some embodiments, after the tag indication (which may be referred to as the first tag indication for convenience) that is adjusted by the sticky operation has been adjusted to the first preset position in the panel 310, the tag indication is already in the first preset position, or is not necessarily readjusted to the "first preset position", therefore the terminal device 110 may further cancel the presentation of the sticky control associated with the first tag indication in the panel 310. For example, taking the first preset position is the highest order location in the sequence for example, for the tag indication 312 that is currently in the highest order location in the allowable adjustment sequence, the sticky control may not be provided for the tag indication 312, so as to avoid misleading the user 140.

Further, the terminal device 110 may detect, in the panel 310, whether there is a position adjustment operation for a position of the tag indication, for example, a position adjustment operation based on a sticky control, a drag control, or the like. If there is a position adjustment operation, the terminal device 110 may adaptively adjust the position of tag indication in the panel 310 based on the position adjustment operation. For example, after the user 140 triggers the sticky control 321 in the page 300A through click, the terminal device 110 may adaptively adjust the order locations of tag indication 312 and the tag indication 313 presented in the panel 310 to obtain the effect as illustrated in the page 300B.

In some embodiments, the terminal device 110 may correspondingly adjust the navigation tag in the navigation region 210 based on the adjustment result performed by the user 140 in the panel 310. In other words, the terminal device 110 may adaptively adjust the position of the navigation tag in the navigation region 210 based on the adjustment result of the tag indication. For example, when the user 140 performs a position adjustment operation in the panel 310, the navigation bar 210 may also synchronously present a preview of the position adjustment result, for example, as shown in the page 300C, the navigation region 210 may present a preview effect of the adjusted navigation region 210 based on the adjustment result of the panel 310. In some embodiments, after presenting the preview effect, the navigation region 210 may ask the user 140 whether to confirm the adjustment, said differently, whether to save the current position adjustment result. If the user 140 expects to save the current position adjustment result, a confirmation instruction for the position adjustment operation may be sent to the terminal device 110. The terminal device 110 may actually apply the position adjustment operation to the navigation tag in the navigation region 210 in response to detecting the confirmation instruction for the position adjustment operation, to complete the adjustment. Alternatively or additionally, in order to facilitate the user 140 to confirm the position adjustment result, the terminal device 110 may further provide a confirmation control (for example, the confirmation control 325 in the page 300A) in the panel 310, so that the user 140 may determine the position adjustment operation based on the preset operation with the confirmation control 325, or in other words, confirm that the current position adjustment result is valid and expect to perform the current position adjustment operation.

Therefore, the preview effect can be provided for the user 140 for perception of the adjustment result, the adjustment is performed more efficiently, and the poor user experience due to misoperation of the user 140 and the like is reduced.

Similarly, in the case that the preview is not provided to the user 140, the confirmation process may also be configured for the user 140. For example, after the page 300B is obtained based on the position adjustment operation of the user 140, it may be determined whether the user 140 confirms the position adjustment operation performed this time based on the result obtained by sending the query information to the user 140, or based on the operation result of the user 140 on the confirmation control 325, or in other words, whether the user 140 expects to perform the current position adjustment operation and whether the current position adjustment operation is valid. Therefore, the poor user experience due to misoperation of the user 140 and the like is reduced.

Therefore, after the user 140 completes the position adjustment operation based on the page 300B and/or the page 300C, the adjustment result as illustrated in the page 200D may be finally obtained, to complete the adjustment operation on the navigation tag in the navigation region 210 (or, in particular, the adjustment operation on the presentation positions of the navigation tag 212 and the navigation tag 213).

In some embodiments, in order to facilitate the user 140 to quickly perform the rollback adjustment operation, for example, the adjustment result of the tag indication is unsatisfactory, it may also allow to cancel the position adjustment operation previously implemented based on the panel 310. For example, in the panel 310, a cancel control (for example, a cancel control 324 in the page 300A) may be provided for the user 140. The user 140 may trigger the cancel control 324 based on a preset operation to send a cancel instruction for the position adjustment operation. Correspondingly, the terminal device 110 may cancel the adjustment of the presentation order of the navigation tag in response to detecting the cancel instruction for the position adjustment operation in the panel, so as to quickly implement the rollback of the position adjustment operation in the panel 310, and improve the operation efficiency of the user 140.

In some embodiments, the terminal device 110 may also be configured with logic to cancel or stop presentation for the panel 310, so as to avoid erroneously occupying the page display space by the panel 310 when the user 140 finishes using or is not required by the user 140. Specifically, the terminal device 110 may also be configured with a preset operation for canceling the presentation of the panel, and stop presenting the panel 310 when the preset operation is detected. For example, the panel 310 may be configured with a closing control (for example, the closing control 326 in the page 300A), and the corresponding preset operation may be that the closing control 326 is triggered by the user 140. Similarly, after the user 140 submits the position adjustment operation in the panel 310 (or in other words, after the user 140 confirms the position adjustment operation performed by the user 140), the terminal device 110 may also close the panel 310 based on the submission and confirmation operation of the user 140 (for example, the user 140 triggers the confirmation control 325), so as to automatically cancel the panel 310 after the user 140 completes the adjustment, thereby improving the interaction experience of the user 140. Alternatively or additionally, after the user 140 closes the panel 310, if the user 140 does not confirm that the current position adjustment operation is valid, the terminal device 110 may present the navigation region 210 based on the configuration-before-adjustment.

In some embodiments, for the case of closing the panel 310, whether the user 140 is allowed to close the panel 310 in a manner such as clicking on the mask layer region (e.g., region 320) may also be configured for the demand. For example, with considering user 140 operation convenience, the manner through which to close the panel 310 by clicking the region 320 may be configured for the user 140. In other scenarios, the manner through which not to close the panel 310 by clicking on the region 320 may be configured for the user 140, for example, in consideration of avoiding the user 140 accidentally touching the panel 310 and exit the panel 310 mistakenly.

In summary, according to various embodiments of the present disclosure, the adjustment to the navigation tag in the navigation region may be implemented based on the position adjustment control and/or the panel. Therefore, the user can conveniently and quickly customize the arrangement order of the plurality of navigation tags, flexibly adjust the presentation of the navigation tag according to the use requirement, which can improve the page browsing efficiency and the user experience.

### Example Processes

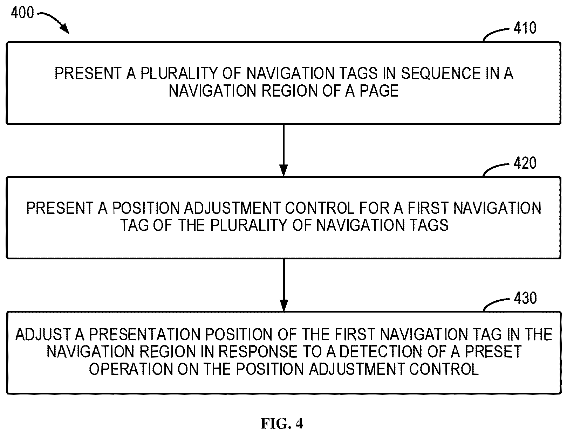

FIG. 4 illustrates a flowchart of a method 400 for page interaction according to some embodiments of the present disclosure. The method 400 may be implemented at the terminal device 110. The method 400 is described below with reference to FIG. 1.

At block 410, the terminal device 110 presents a plurality of navigation tags in sequence in a navigation area of a page.

At block 420, the terminal device 110 presents a position adjustment control for a first navigation tag of the plurality of navigation tags.

At block 430, the terminal device 110 adjusts a presentation position of the first navigation tag in the navigation area in response to a detection of a preset operation on the position adjustment control.

In some embodiments, the first navigation tag corresponds to a first page, and wherein presenting the position adjustment control comprises: presenting the position adjustment control in response to detecting that a predetermined interaction condition associated with the first page is satisfied.

In some embodiments, adjusting the presentation position of the first navigation tag in the navigation area comprises: adjusting the first navigation tag to a first preset position in the navigation area.

In some embodiments, a second navigation tag of the plurality of navigation tags corresponds to a second page and is fixedly presented at a second preset position in the navigation area; and wherein the first preset position is adjacent to the second preset position in the navigation area.

In some embodiments, adjusting the presentation position of the first navigation tag in the navigation area comprises: moving the first navigation tag in a predetermined direction by a predetermined number of times within the navigation area.

In some embodiments, the predetermined direction is a direction toward a position that is forward of the current presentation position of the first navigation tag.

In some embodiments, the method 400 further comprises: presenting first prompt information while presenting the position adjustment control, the first prompt information indicating an expected adjustment result of the presentation position of the first navigation tag by the position adjustment control.

In some embodiments, the method 400 further comprises: presenting second prompt information after the presentation position of the first navigation tag is adjusted, the second prompt information indicating a position adjustment operation on the navigation tag in the navigation area.

In some embodiments, the first navigation tag corresponds to a first page, wherein presenting the position adjustment control comprises: presenting the position adjustment control after the first page is presented for a predetermined time.

In some embodiments, adjusting the presentation position of the first navigation tag in the navigation area comprises: presenting, with an animation effect, a movement of the first navigation tag from the current presentation position to the adjusted presentation position.

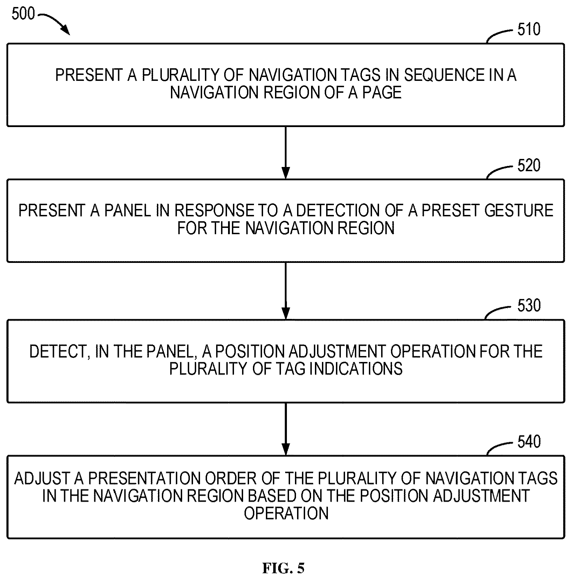

FIG. 5 illustrates a flowchart of a method 500 for page interaction according to some other embodiments of the present disclosure. The method 500 may be implemented at the terminal device 110. The method 500 is described below with reference to FIG. 1.

At block 510, the terminal device 110 presents a plurality of navigation tags in sequence in a navigation area of a page.

At block 520, the terminal device 110 presents a panel in response to a detection of a preset gesture for the navigation area. In the embodiment of this disclosure, the panel presents at least a plurality of tag indications respectively corresponding to the plurality of navigation tags.

At block 530, the terminal device 110 detects, in the panel, a position adjustment operation for the plurality of tag indications.

At block 540, the terminal device 110 adjusts a presentation order of the plurality of navigation tags in the navigation area based on the position adjustment operation.

In some embodiments, the preset gesture comprises a long-press gesture detected in the navigation area or in the vicinity of the navigation area.

In some embodiments, the method 500 further comprises: causing the navigation area relative to at least a portion of the page to be highlighted during the presentation of the panel.

In some embodiments, presenting the panel comprises: presenting the panel separately from the navigation area.

In some embodiments, the plurality of tag indications is presented in the panel in the order of the plurality of navigation tags, and the method 500 further comprises: adjusting in the panel, in response to a detection of the position adjustment operation, the presentation order of the plurality of tag indications in the panel based on the position adjustment operation.

In some embodiments, adjusting the presentation order of the plurality of navigation tags in the navigation area comprises: adjusting, in response to a detection of a confirmation instruction for the position adjustment operation, the presentation order of the plurality of navigation tags in the navigation area based on the position adjustment operation.

In some embodiments, the method 500 further comprises: cancelling, in response to a detection of a cancel instruction for the position adjustment operation in the panel, the adjustment to the presentation order of the plurality of navigation tags.

In some embodiments, the method 500 further comprises: stopping presenting the panel in response to a detection of a preset operation for the panel.

In some embodiments, the panel further presents a sticky control associated with a first tag indication of the plurality of tag indications, and wherein adjusting the presentation order of the plurality of navigation tags in the navigation area comprises: adjusting, in response to a determination that the position adjustment operation comprises a preset operation for the sticky control, the first navigation tag corresponding to the first tag indication to a first preset position in the navigation area.

In some embodiments, a second navigation tag of the plurality of navigation tags corresponds to a predetermined page and is fixedly presented at a second preset position in the navigation area; and wherein the first preset position in the navigation area is adjacent to the second preset position in the navigation area.

In some embodiments, the method 500 further comprises: adjusting in the panel, in response to a determination that the position adjustment operation comprises the preset operation for the sticky control, the first tag indication to the first preset position in the panel.

In some embodiments, a second tag indication of the plurality of tag indications is fixedly presented in a second preset position in the panel; and wherein the first preset position in the panel is a position adjacent to the second preset position in the panel.

In some embodiments, the method 500 further comprises: canceling in the panel, after adjusting the first tag indication to the first preset position in the panel, the presentation of the sticky control associated with the first tag indication.

In some embodiments, the position adjustment operation indicates moving a third tag indication of the plurality of tag indications from a first position to a second position in the panel, and wherein adjusting the presentation order of the plurality of navigation tags in the navigation area comprises: adjusting in the navigation area, based on the position adjustment operation, a third navigation tag corresponding to the third tag indication to a presentation position corresponding to the second position in the panel.

In some embodiments, the panel further presents a drag control associated with the third tag indication, and the position adjustment operation comprises a drag operation on the drag control to move the third tag indication from the first position to the second position.

In some embodiments, the method 500 further comprises: detecting in the panel, a deletion instruction for at least one tag indication of the plurality of tag indications, and canceling in the navigation area, the presentation of at least one navigation tag corresponding to the at least one tag indication.

### Example Apparatus and Device

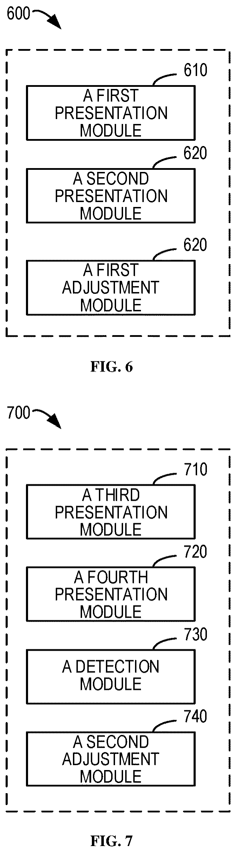

FIG. 6 is a schematic structural block diagram of an apparatus 600 for page interaction according to some embodiments of the present disclosure. The apparatus 600 may be implemented or included in the terminal device 110. The various modules/components in the apparatus 600 may be implemented by hardware, software, firmware, or any combination thereof.

As shown, the apparatus 600 comprises a first presentation module 610, configured to present a plurality of navigation tags in sequence in a navigation area of a page. The apparatus 600 further comprises a second presentation module 620, configured to present a position adjustment control for a first navigation tag of the plurality of navigation tags. The apparatus 600 further comprises a first adjustment module 630, configured to adjust a presentation position of the first navigation tag in the navigation area in response to a detection of a preset operation on the position adjustment control.

In some embodiments, the first navigation tag corresponds to a first page, and wherein presenting the position adjustment control comprises: presenting the position adjustment control in response to detecting that a predetermined interaction condition associated with the first page is satisfied.

In some embodiments, adjusting the presentation position of the first navigation tag in the navigation area comprises: adjusting the first navigation tag to a first preset position in the navigation area.

In some embodiments, a second navigation tag of the plurality of navigation tags corresponds to a second page and is fixedly presented at a second preset position in the navigation area; and wherein the first preset position is adjacent to the second preset position in the navigation area.

In some embodiments, adjusting the presentation position of the first navigation tag in the navigation area comprises: moving the first navigation tag in a predetermined direction by a predetermined number of times within the navigation area.

In some embodiments, the predetermined direction is a direction toward a position that is forward of the current presentation position of the first navigation tag.

In some embodiments, the apparatus 600 further comprises: a first prompt module, configured to present first prompt information while presenting the position adjustment control, the first prompt information indicating an expected adjustment result of the presentation position of the first navigation tag by the position adjustment control.

In some embodiments, the apparatus 400 further comprises: a second prompt module, configured to present second prompt information after the presentation position of the first navigation tag is adjusted, the second prompt information indicating a position adjustment operation on the navigation tag in the navigation area.

In some embodiments, the first navigation tag corresponds to a first page, wherein presenting the position adjustment control in the second presentation module 620 comprises: presenting the position adjustment control after the first page is presented for a predetermined time.

In some embodiments, adjusting the presentation position of the first navigation tag in the navigation area comprises: presenting, with an animation effect, a movement of the first navigation tag from the current presentation position to the adjusted presentation position.

FIG. 7 is a schematic structural block diagram of an apparatus 700 for page interaction according to some embodiments of the present disclosure. The apparatus 700 may be implemented or included in the terminal device 110. The various modules/components in the apparatus 700 may be implemented by hardware, software, firmware, or any combination thereof.

As shown in figures, the apparatus 700 comprises a third presentation module 710, configured to present a plurality of navigation tags in sequence in a navigation area of a page. The apparatus 700 further comprises a fourth presentation module 720, configured to present a panel in response to a detection of a preset gesture for the navigation area, the panel presenting at least a plurality of tag indications respectively corresponding to the plurality of navigation tags. The apparatus 700 further comprises a detection module 730, configured to detect, in the panel, a position adjustment operation for the plurality of tag indications. The apparatus 700 further comprises a second adjustment module 740, configured to adjust a presentation order of the plurality of navigation tags in the navigation area based on the position adjustment operation.

In some embodiments, the preset gesture comprises a long-press gesture detected in the navigation area or in the vicinity of the navigation area.

In some embodiments, the apparatus 700 further comprises a highlighting module, configured to cause the navigation area relative to at least a portion of the page to be highlighted during the presentation of the panel.

In some embodiments, presenting the panel comprises: presenting the panel separately from the navigation area.

In some embodiments, the plurality of tag indications is presented in the panel in the order of the plurality of navigation tags, and the apparatus 700 further comprises: a third adjustment module, configured to adjust in the panel, in response to a detection of the position adjustment operation, the presentation order of the plurality of tag indications in the panel based on the position adjustment operation.

In some embodiments, adjusting the presentation order of the plurality of navigation tags in the navigation area comprises: adjusting, in response to a detection of a confirmation instruction for the position adjustment operation, the presentation order of the plurality of navigation tags in the navigation area based on the position adjustment operation.

In some embodiments, the apparatus 700 further comprises: a first cancelation module, configured to cancel, in response to a detection of a cancel instruction for the position adjustment operation in the panel, the adjustment to the presentation order of the plurality of navigation tags.

In some embodiments, the apparatus 700 further comprises: a stopping module, configured to stop presenting the panel in response to a detection of a preset operation for the panel.

In some embodiments, the panel further presents a sticky control associated with a first tag indication of the plurality of tag indications, and wherein adjusting the presentation order of the plurality of navigation tags in the navigation area in the second adjustment module 740 comprises: adjusting, in response to a determination that the position adjustment operation comprises a preset operation for the sticky control, the first navigation tag corresponding to the first tag indication to a first preset position in the navigation area.

In some embodiments, a second navigation tag of the plurality of navigation tags corresponds to a predetermined page and is fixedly presented at a second preset position in the navigation area; and wherein the first preset position in the navigation area is adjacent to the second preset position in the navigation area.

In some embodiments, the apparatus 700 further comprises: a fourth adjustment module, configured to adjust in the panel, in response to a determination that the position adjustment operation comprises the preset operation for the sticky control, the first tag indication to the first preset position in the panel.

In some embodiments, a second tag indication of the plurality of tag indications is fixedly presented in a second preset position in the panel; and wherein the first preset position in the panel is a position adjacent to the second preset position in the panel.

In some embodiments, the apparatus 700 further comprises: a second cancellation module, configured to cancel in the panel, after adjusting the first tag indication to the first preset position in the panel, the presentation of the sticky control associated with the first tag indication.

In some embodiments, the position adjustment operation indicates moving a third tag indication of the plurality of tag indications from a first position to a second position in the panel, and wherein adjusting the presentation order of the plurality of navigation tags in the navigation area comprises: adjusting in the navigation area, based on the position adjustment operation, a third navigation tag corresponding to the third tag indication to a presentation position corresponding to the second position in the panel.

In some embodiments, the panel further presents a drag control associated with the third tag indication, and the position adjustment operation comprises a drag operation on the drag control to move the third tag indication from the first position to the second position.

In some embodiments, the apparatus 700 further comprises: a third cancellation module, configured to detect in the panel, a deletion instruction for at least one tag indication of the plurality of tag indications, and cancel in the navigation area, the presentation of at least one navigation tag corresponding to the at least one tag indication.

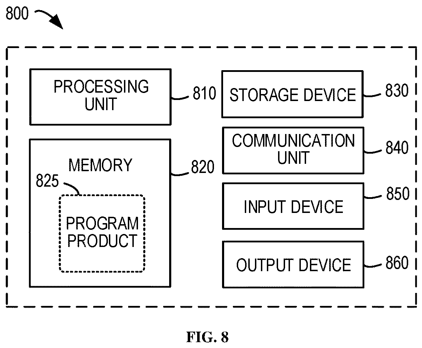

FIG. 8 illustrates a block diagram of an electronic device 800 in which one or more embodiments of the present disclosure can be implemented. It would be appreciated that the electronic device 800 shown in FIG. 8 is only an example and should not constitute any restriction on the function and scope of the embodiments described herein. The electronic device 800 may be used to implement the terminal device 110 in FIG. 1.

As shown in FIG. 8, the electronic device 800 is in the form of a general computing device. The components of the electronic device 800 may include, but are not limited to, one or more processors or processing units 810, a memory 820, a storage device 830, one or more communication units 840, one or more input devices 850, and one or more output devices 860. The processing unit 810 may be an actual or virtual processor and can execute various processes according to the programs stored in the memory 820. In a multiprocessor system, multiple processing units execute computer executable instructions in parallel to improve the parallel processing capability of the electronic device 800.

The electronic device 800 typically includes a variety of computer storage medium. Such medium may be any available medium that is accessible to the electronic device 800, including but not limited to volatile and non-volatile medium, removable and non-removable medium. The memory 820 may be volatile memory (for example, a register, cache, a random access memory (RAM)), a non-volatile memory (for example, a read-only memory (ROM), an electrically erasable programmable read-only memory (EEPROM), a flash memory) or any combination thereof. The storage device 830 may be any removable or non-removable medium, and may include a machine-readable medium, such as a flash drive, a disk, or any other medium, which can be used to store information and/or data (such as training data for training) and can be accessed within the electronic device 800.

The electronic device 800 may further include additional removable/non-removable, volatile/non-volatile storage medium. Although not shown in FIG. 8, a disk driver for reading from or writing to a removable, non-volatile disk (such as a "floppy disk"), and an optical disk driver for reading from or writing to a removable, non-volatile optical disk can be provided. In these cases, each driver may be connected to the bus (not shown) by one or more data medium interfaces. The memory 820 may include a computer program product 825, which has one or more program modules configured to perform various methods or acts of various embodiments of the present disclosure.

The communication unit 840 communicates with a further computing device through the communication medium. In addition, functions of components in the electronic device 800 may be implemented by a single computing cluster or multiple computing machines, which can communicate through a communication connection. Therefore, the electronic device 800 may be operated in a networking environment using a logical connection with one or more other servers, a network personal computer (PC), or another network node.

The input device 850 may be one or more input devices, such as a mouse, a keyboard, a trackball, etc. The output device 860 may be one or more output devices, such as a display, a speaker, a printer, etc. The electronic device 800 may also communicate with one or more external devices (not shown) through the communication unit 840 as required. The external device, such as a storage device, a display device, etc., communicate with one or more devices that enable users to interact with the electronic device 800, or communicate with any device (for example, a network card, a modem, etc.) that makes the electronic device 800 communicate with one or more other computing devices. Such communication may be executed via an input/output (I/O) interface (not shown).

According to example implementation of the present disclosure, a computer-readable storage medium is provided, on which a computer-executable instruction is stored, where the computer-executable instructions is executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, special computers or other programmable data processing devices to produce a machine that generates a device to implement the functions/acts specified in one or more blocks in the flow chart and/or the block diagram when these instructions are executed through the processing units of the computer or other programmable data processing devices. These computer-readable program instructions may also be stored in a computer-readable storage medium. These instructions enable a computer, a programmable data processing device and/or other devices to work in a specific way. Therefore, the computer-readable medium containing the instructions includes a product, which includes instructions to implement various aspects of the functions/acts specified in one or more blocks in the flowchart and/or the block diagram.

The computer-readable program instructions may be loaded onto a computer, other programmable data processing apparatus, or other devices, so that a series of operational steps can be performed on a computer, other programmable data processing apparatus, or other devices, to generate a computer-implemented process, such that the instructions which execute on a computer, other programmable data processing apparatus, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a module, a program segment or instructions, which contains one or more executable instructions for implementing the specified logic function. In some alternative implementations, the functions marked in the block may also occur in a different order from those marked in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is example, not exhaustive, and is not limited to the disclosed implementations. Without departing from the scope and spirit of the described implementations, many modifications and changes are obvious to ordinary skill in the art. The selection of terms used in this article aims to best explain the principles, practical application or improvement of technology in the market of each implementation, or to enable other ordinary skill in the art to understand the various embodiments disclosed herein.

## Claims

1. A method for page interaction, comprising:
presenting a plurality of navigation tags in sequence in a navigation region of a page;
presenting a position adjustment control for a first navigation tag of the plurality of navigation tags; and
adjusting a presentation position of the first navigation tag in the navigation region in response to a detection of a preset operation on the position adjustment control.

2. The method of claim 1, wherein the first navigation tag corresponds to a first page, and wherein presenting the position adjustment control comprises:
presenting the position adjustment control in response to detecting that a predetermined interaction condition associated with the first page is satisfied.

3. The method of claim 1, wherein adjusting the presentation position of the first navigation tag in the navigation region comprises:
adjusting the first navigation tag to a first preset position in the navigation region.

4. The method of claim 3, wherein a second navigation tag of the plurality of navigation tags corresponds to a second page and is fixedly presented at a second preset position in the navigation region; and
the first preset position is adjacent to the second preset position in the navigation region.

5. The method of claim 1, wherein adjusting the presentation position of the first navigation tag in the navigation region comprises:
moving the first navigation tag in a predetermined direction by a predetermined number of times within the navigation region.

6. The method of claim 5, wherein the predetermined direction is a direction toward a position that is forward of the current presentation position of the first navigation tag.

7. The method of claim 1, further comprises:
presenting first prompt information while presenting the position adjustment control, the first prompt information indicating an expected adjustment result of the presentation position of the first navigation tag by the position adjustment control.

8. The method of claim 1, further comprises:
presenting second prompt information after the presentation position of the first navigation tag is adjusted, the second prompt information indicating a position adjustment operation on the navigation tag in the navigation region.

9. The method of claim 1, wherein the first navigation tag corresponds to a first page, wherein presenting the position adjustment control comprises:
presenting the position adjustment control after the first page is presented for a predetermined time.

10. The method of any of claims 1 to 9, wherein adjusting the presentation position of the first navigation tag in the navigation region comprises:
presenting, with an animation effect, a movement of the first navigation tag from the current presentation position to the adjusted presentation position.

11. A method for page interaction, comprising:
presenting a plurality of navigation tags in sequence in a navigation region of a page;
presenting a panel in response to a detection of a preset gesture for the navigation region, the panel presenting at least a plurality of tag indications respectively corresponding to the plurality of navigation tags;
detecting, in the panel, a position adjustment operation for the plurality of tag indications; and
adjusting a presentation order of the plurality of navigation tags in the navigation region based on the position adjustment operation.

12. The method of claim 11, wherein the preset gesture comprises a long-press gesture detected in the navigation region or in the vicinity of the navigation region.

13. The method of claim 11, further comprises:
causing the navigation region relative to at least a portion of the page to be highlighted during the presentation of the panel.

14. The method of claim 11, wherein presenting the panel comprises:
presenting the panel separately from the navigation region.

15. The method of claim 11, wherein the plurality of tag indications is presented in the panel in the order of the plurality of navigation tags, and the method further comprises:
adjusting in the panel, in response to a detection of the position adjustment operation, the presentation order of the plurality of tag indications in the panel based on the position adjustment operation.

16. The method of claim 11, wherein adjusting the presentation order of the plurality of navigation tags in the navigation region comprises:
adjusting, in response to a detection of a confirmation instruction for the position adjustment operation, the presentation order of the plurality of navigation tags in the navigation region based on the position adjustment operation.

17. The method of claim 11, further comprises:
cancelling, in response to a detection of a cancel instruction for the position adjustment operation in the panel, the adjustment to the presentation order of the plurality of navigation tags.

18. The method of claim 11, further comprises:
stopping presenting the panel in response to a detection of a preset operation for the panel.

19. The method of claim 11, wherein the panel further presents a sticky control associated with a first tag indication of the plurality of tag indications, and wherein adjusting the presentation order of the plurality of navigation tags in the navigation region comprises:
adjusting, in response to a determination that the position adjustment operation comprises a preset operation for the sticky control, the first navigation tag corresponding to the first tag indication to a first preset position in the navigation region.

20. The method of claim 19, wherein a second navigation tag of the plurality of navigation tags corresponds to a predetermined page and is fixedly presented at a second preset position in the navigation region; and
the first preset position in the navigation region is adjacent to the second preset position in the navigation region.

21. The method of claim 19, further comprises:
adjusting in the panel, in response to a determination that the position adjustment operation comprises the preset operation for the sticky control, the first tag indication to the first preset position in the panel.

22. The method of claim 21, wherein a second tag indication of the plurality of tag indications is fixedly presented in a second preset position in the panel; and
the first preset position in the panel is a position adjacent to the second preset position in the panel.

23. The method of claim 21, further comprises:
canceling in the panel, after adjusting the first tag indication to the first preset position in the panel, the presentation of the sticky control associated with the first tag indication.

24. The method of claim 11, wherein the position adjustment operation indicates moving a third tag indication of the plurality of tag indications from a first position to a second position in the panel, and wherein adjusting the presentation order of the plurality of navigation tags in the navigation region comprises:
adjusting in the navigation region, based on the position adjustment operation, a third navigation tag corresponding to the third tag indication to a presentation position corresponding to the second position in the panel.

25. The method of claim 24, wherein the panel further presents a drag control associated with the third tag indication, and the position adjustment operation comprises a drag operation on the drag control to move the third tag indication from the first position to the second position.

26. The method of any of claims 11 to 25, further comprises:
detecting in the panel, a deletion instruction for at least one tag indication of the plurality of tag indications, and canceling in the navigation region, the presentation of at least one navigation tag corresponding to the at least one tag indication.

27. An apparatus for page interaction, comprising:
a first presentation module, configured to present a plurality of navigation tags in sequence in a navigation region of a page;
a second presentation module, configured to present a position adjustment control for a first navigation tag of the plurality of navigation tags; and
a first adjustment module, configured to adjust a presentation position of the first navigation tag in the navigation region in response to a detection of a preset operation on the position adjustment control.

28. An apparatus for page interaction, comprising:
a third presentation module, configured to present a plurality of navigation tags in sequence in a navigation region of a page;
a fourth presentation module, configured to present a panel in response to a detection of a preset gesture for the navigation region, the panel presenting at least a plurality of tag indications respectively corresponding to the plurality of navigation tags;
a detection module, configured to detect, in the panel, a position adjustment operation for the plurality of tag indications; and
a second adjustment module, configured to adjust a presentation order of the plurality of navigation tags in the navigation region based on the position adjustment operation.

29. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 10 and/or the method of any of claims 11 to 26.

30. A computer-readable storage medium having a computer program stored thereon which, upon execution by a processor to implement the method of any of claims 1 to 10 and/or the method of any of claims 11 to 26.
